# EUROPÄISCHE PATENTSCHRIFT

(11) **EP 2 067 591 B1**
(45) Veröffentlichungstag und Bekanntmachung des Hinweises auf die Patenterteilung: **19.10.2011**
(21) Anmeldenummer: 08450189.9
(22) Anmeldetag: 01.12.2008
(51) Int. Cl.: B29B 9/06

(54) **Verfahren zum Andrücken der Messer an eine Lochplatte und Vorrichtung zur Durchführung des Verfahrens**
Method for pressing knives on a die plate and device for carrying out the method
Procédé pour appuyer des lames sur une plaque à trou et dispositif d'exécution du procédé

(30) Priorität: 03.12.2007 AT 72907 U
(43) Veröffentlichungstag der Anmeldung: 10.06.2009
(73) Patentinhaber: ECON Maschinenbau und Steuerungstechnik GmbH, 4616 Weisskirchen/Traun (AT)
(72) Erfinder: Hehenberger, Gerhard, 4622 Eggendorf (AT); Remili, Johannes, 4073 Wilhering (AT)
(74) Vertreter: Hübscher, Helmut

(56) Entgegenhaltungen:
- WO-A-01/94088
- DE-A1-102004 020 898
- US-A1- 2004 009 254
- US-B1- 6 332 765

## Beschreibung

Die vorliegende Erfindung bezieht sich auf Unterwassergranulier-Einrichtungen für thermoplastische Kunststoffe und betrifft ein Verfahren zur selbsttätigen Steuerung des Anpressdruckes von Granuliermessern, welche an einer Lohplatte anliegen, sowie eine Vorrichtung zur Durchführung des Verfahrens.

Zur einwandfreien Granulierung unter Wasser ist eine spaltfreie Auflage der Schneidmesser an der Lochplatte, aus der die Kunststoffstränge austreten, erforderlich. Erst hierdurch gelingt ein Abscheren der Vielzahl der aus der Lochplatte austretenden Kunststoffstränge ohne Deformation des erzeugten Granulats mit Fäden oder Schergraten, welche eine erhebliche Qualitätsminderung darstellen würden.

Es ist bekannt, dass eine spaltfreie Auflage der Schneidmesser auf der Lochplatte über einen längeren Betriebszeitraum nur schwer sicherzustellen ist. Neben dem Verschleiß der Schneidmesser tragen auch die Stellkräfte auf die Antriebswelle der Messerhalteeinrichtung dazu negativ bei, die sich aufgrund der örtlichen Besonderheiten, wie die zu verarbeitende Kunststoffsorte, die Form und Anzahl der Schneidmesser, sowie der Drehzahl der Schneidmesserwelle ergeben.

Die DE 34 05 978 offenbart eine Idee zur gezielten Anpressung der Schneidmesser an die Lochplatte durch eine einstellbare Druckregelvorrichtung, über welche der mittels einer Kolben-Zylindereinheit betätigte Vorschub bzw. die Rückstellung der die Schneidmesser tragenden Schneidmesserwelle erfolgt. Eine befriedigende Einstellung der Schneidmesser ist dadurch aber nicht möglich, da zur Vermeidung von vorzeitigem Verschleiß der Schneidmesser die hydraulische Druckkraft im Hydrauliksystem zur Korrektur der Anpresskraft der Schneidmesser gegen die Lochplatte mittels Erfahrungswerten nachträglich noch eingestellt werden muss.

Zur Beseitigung der Nachteile, die sich aus einer wechselnden Belastung der Schneidmesser im Betriebszustand ergeben, ist aus der EP 0 418 941 bekannt, eine gezielte Anpresskraft der Schneidmesser an die Lochplatte unter indirekter Einbeziehung der bei der Rotation der Messerwelle durch die Schneidmesser im Wasser erzeugten hydraulischen Druckkräfte einzusetzen. Hierbei wird die Drehzahl oder die Leistungsaufnahme der Antriebseinrichtung für die Schneidmesser während der Granulierung erfasst und im Vergleich mit ursprünglich ermittelten Standardwerten die hieraus resultierende Vortriebskraft für die Messerwelle festgelegt.

Auch dieses Verfahren ist mit Nachteilen behaftet, da auch hier im wesentlichen Erfahrungswerte in eine kontrollierte Schneidmesseranstellung mit einfließen, die örtliche Gegebenheiten bzw. Veränderungen im Zusammenwirken der Schneidmesser mit der Lochplatte nur ungenau erfassen.

Als Abhilfe schlägt die DE 44 08 235 vor, durch eine geeignete Ermittlung des im Innenraum der Granulierhaube herrschenden Wasserdrucks und dessen Umsetzung zusammen mit den übrigen herrschenden Betriebsbedingungen in einem Rechner eine kontrollierte Bestimmung der Anpresskraft für die Schneidmesser zu erreichen. Dies erfolgt u.a. durch eine örtlich genaue Bestimmung des in der Granulierhaube unterschiedlich herrschenden Wasserdrucks der auf die Schneidmesserwelle in Abhängigkeit der herrschenden Betriebsverhältnisse wechselnd wirkenden Druckkräfte. Zusammen mit einem Basiswert, der bezogen auf einen Produktionszyklus bestimmte Besonderheiten der zu granulierenden Produkte repräsentiert, werden diese Werte dann in bekannter Weise mittels einer Steuereinrichtung zur Festlegung des Anpressdruckes herangezogen. Diese Wertebestimmung ist jedoch mit einem hohen technischen Aufwand verbunden und löst die oben geschilderten Probleme nur unvollkommen.

Die Druckschrift DE-A-10 2004 020 898 offenbart ein Verfahren gemäß dem Oberbegriff des Anspruchs 1 und eine Vorrichtung gemäß dem Oberbegriff des Anspruchs 5.

Als weiterer Nachteil der Lösungsvorschläge im Stand der Technik ist zu erwähnen, dass es bei Einsatz eines Servomotors über den Stellbereich geringe Schwankungen im Stillstandsmoment gibt, wenn über den Messerverschleißweg eine Drehung des Rotors erfolgt, bedingt durch die Anordnung der Permanentmagnete und der damit verbundenen notwendigen Kommutierung.

Der Erfindung liegt daher die Aufgabe zugrunde diesen Nachteilen abzuhelfen und durch geeignete Maßnahmen eine gezielte Steuerung der Anpresskraft der Schneidmesser an die Lochplatte zu ermöglichen.

Diese Aufgabe wird dadurch gelöst, dass die rotierende Welle, auf der sich der Messerkopf befindet, gemeinsam mit dem Wellenlager in Achsrichtung vor, also gegen die Lochplatte, und zurück bewegen lässt, wobei die axiale Verstellung nur über einen Pneumatikzylinder erfolgt, der die Welle samt Wellenlagerung über eine Zahnstange mit Ritzel gegen die Lochplatte presst. Dabei wird der Pneumatikzylinder über ein Proportional- Pneumatikventil mit Istwertrückführung angesteuert.

Am Bedienfeld der Maschine wird für den Anpressdruck ein Sollwert vorgegeben, der in der Steuerung in einen äquivalenten Analogwert umgewandelt und an das Proportional-Pneumatikventil übertragen wird. Das Ventil steuert den Pneumatikzylinder entsprechend dem Sollwert an und meldet den aktuellen Istwert an die Steuerungseinheit zurück. Soll- und Istwert wurden zuvor in der Steuerung kalibriert und werden im Betrieb laufend verglichen und ausgewertet. Bei einer Abweichung, die über vorgegebene Toleranzwerte hinausgeht, wird eine Störung gemeldet und der Granuliervorgang abgebrochen bzw. nicht gestartet. Liegt der aktuelle Anpressdruck im Toleranzbereich, wird der Granuliervorgang gestartet bzw. fortgesetzt.

Der besondere Vorteil in der Verwendung eines Proportional-Pneumatikventils ist darin zu sehen, dass die Konstruktion und Steuerung gegenüber den Lösungsvorschlägen im Stand der Technik erheblich vereinfacht wird. Zudem kann das Proportional-Pneumatikventil relativ leicht ausgetauscht werden. Darüber hinaus ist der Anpressdruck über einen größeren Stellbereich veränderbar, bedingt durch die relativ große Ventilfläche. Sollte eine Leckage auftreten oder die Pneumatik nicht angeschlossen sein, erfolgt automatisch eine Fehlermeldung und der Granuliervorgang kommt nicht in Gang oder wird abgebrochen, wodurch eine Beeinträchtigung der Messer am Schneidkopf zuverlässig vermieden wird.

Im Vergleich zu einer hydraulischen Anpressung ist das Lochbrechmoment im Pneumatikzylinder wesentlich niedriger. Dieses Lochbrechmoment führt bei einem Hydraulikzylinder zudem zu unterschiedlichen Anpresskräften. Darüber hinaus wäre eine hydraulische Lösung auch wesentlich kostenintensiver zu realisieren. Ein weiterer Vorteil der vorliegenden Erfindung liegt darin, dass der Bereich der Anpresskraft beim Pneumatikzylinder durch sehr geringen Aufwand erhöht oder reduziert werden kann, indem lediglich ohne großen Rüstungsaufwand der Pneumatikzylinder ausgetauscht wird.

Ein weiterer Vorteil liegt darin, dass die pneumatische Anpressung sich in der Praxis als dynamischer erweist, da geringere Massenträgheitsmomente bewegt werden müssen im Vergleich zu einem Servomotor.

Durch die vorliegende Erfindung wird es ermöglicht, den Anpressdruck der Messer an die Lochplatte über die gesamte Standzeit der Messer auf einem optimierten Wert zu halten. Abhängig vom Messerverschleiß erfolgt eine im Wesentlichen kontinuierliche Nachführung, womit der Anpressdruck stets innerhalb der Toleranzgrenzen liegt. Damit wird einerseits gewährleistet, dass der Messerverschleiß auf einem minimalen Wert gehalten wird und andererseits, dass die Granulatqualität stets gleich bleibend gut ist.

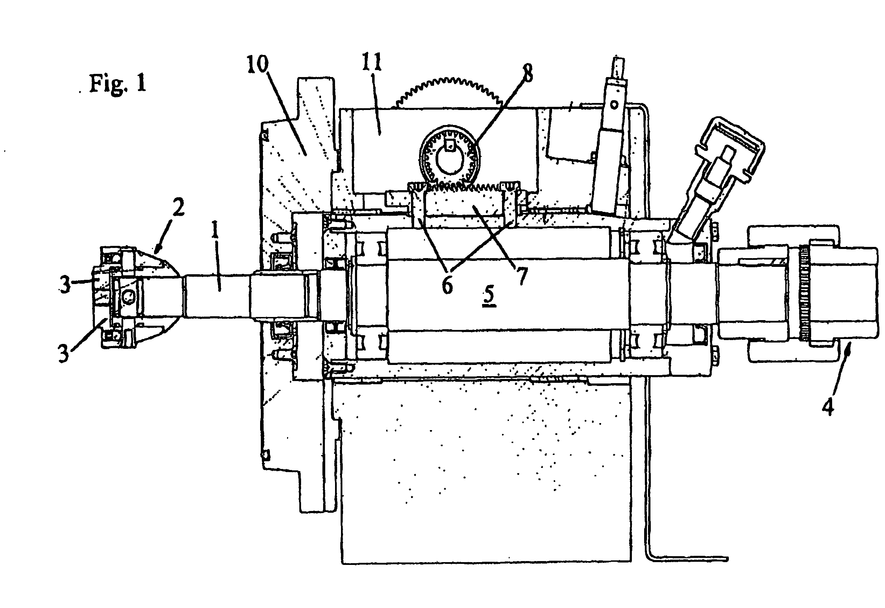

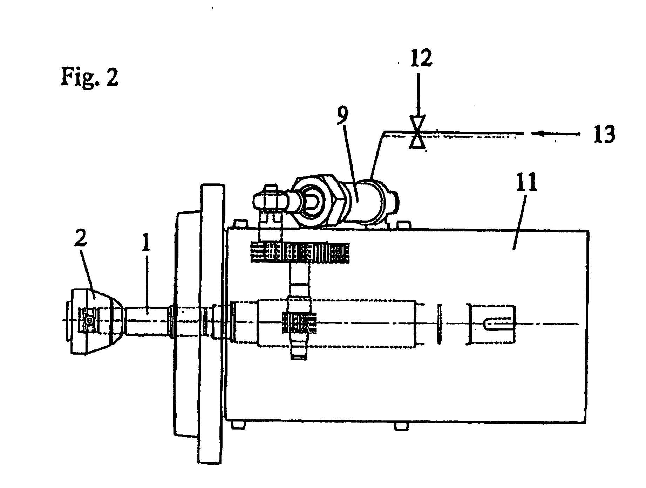

Die Figuren zeigen eine Vorrichtung zur Durchführung des erfindungsgemäßen Verfahrens. Darin zeigt Fig. 1 einen vertikalen Schnitt durch die Messerwelle 1 mit aufgesetztem Messerkopf 2, Wellenlager 5, Wellenantriebsmotor 4, Stirnwand 10 der Granulierhaube, Zahnstange 7, Ritzel 8 zur Bewegung der Zahnstange 7 und dem damit fest verbundenen Wellenlager 5 und das Gehäuse 11, hinter dem der in Fig. 2 dargestellte Pneumatikzylinder 9 angeordnet ist. Innerhalb des Gehäuses 11 befinden sich das Proportional-Pneumatikventil 12 und die nicht separat dargestellte Steuereinheit.

Fig. 2 ist eine Aufsicht auf einen Ausschnitt der Figur 1 und zeigt die Lage des Pneumatikzylinders 9. Das Proportional-Pneumatikventil 12 ist hier zum besseren Verständnis außen liegend dargestellt, befindet sich aber innerhalb des Gehäuses 11. Es wird mit Druckluft 13 von etwa 8 bar angesteuert und auf einen Sollwert von etwa 0 bis 20 mA eingestellt.

Die Messerwelle 1 trägt den Messerkopf 2 mit den Granuliermessern 3 und wird vom Wellenantriebsmotor 4 in Drehung versetzt. Die Welle 1 durchdringt axial das Wellenlager 5, welches über Halteeinrichtungen 6 fest mit einer Zahnstange 7 verbunden ist. In die Zahnstange 7 greifen die Zähne eines Ritzels 8 ein, wobei das Ritzel 8 entweder direkt oder über eine Übersetzung mit dem Pneumatikzylinder 9 verbunden ist. Der Pneumatikzylinder 9 wird über ein Proportional-Pneumatikventil mit Istwertrückführung angesteuert.

Der aktuelle Anpressdruck der Granuliermesser 3 an der nicht dargestellten Lochplatte wird vom Proportional-Pneumatikventil erfasst und an die Steuereinheit gemeldet, welches den ermittelten aktuellen Istwert mit einem vorgegebenen Sollwert vergleicht. In der Steuereinheit ist neben dem Sollwert auch ein Toleranzbereich vorab gespeichert worden.

Weicht der im Granulierbetrieb aktuell gemessene Anpressdruck, also der Istwert vom Sollwert ab, so gibt die Steuereinheit ein Signal an den Pneumatikzylinder 9 ab, der das Ritzel 8 entsprechend in eine Drehbewegung nach links oder nach rechts versetzt, wodurch die über das Wellenlager 5 fix mit der Zahnstange 7 verbundene Welle 1 entsprechend gegen die Lochplatte oder von der Lochplatte weg bewegt wird.

Vor Beginn des Granulierbetriebes wird in derselben Weise der Anpressdruck der Granuliermesser an der Lochplatte gemessen. Liegt dieser Istwert außerhalb des vorgegebenen Toleranzbereiches des Sollwertes, so erfolgt eine Fehlermeldung und der Start des Granuliervorgangs wird unterbunden, indem die Energiezufuhr zum Antriebsmotor 4 blockiert wird.

Falls während des Granulierbetriebes der laufend gemessene Istwert trotz Ansteuerung des Pneumatikzylinders aus dem Toleranzbereich des Sollwertes heraus fällt, beispielsweise durch eine plötzliche Leckage im Pneumatiksystem, wird die Granulierung sofort unterbrochen und die Steuerung gibt eine visuelle und/oder akustische Störmeldung ab.

## Patentansprüche

1. Verfahren zur selbsttätigen Steuerung des an einer Lochplatte wirksamen Anpressdrucks der Granuliermesser (3) einer Vorrichtung zur Granulierung von thermoplastischen Kunststoffsträngen unter Wasser, durch axiales Verschieben einer mittels Wellenantriebsmotor (4) angetriebenen Messerwelle (1) und Anstellung der mit einem Messerkopf (2) der Messerwelle (1) verbundenen Granuliermesser (3) gegen die Lochplatte in einer Granulierhaube, mit den folgenden Verfahrensschritten
- Speicherung eines vorbestimmten Sollwertes für den Anpressdruck der Granuliermesser (3) an der Lochplatte und eines vorgegebenen Toleranzbereiches in einer Steuerungseinheit,
- Messung des Istwertes des Anpressdruckes der Granuliermesser (3) an der Lochplatte mittels eines Proportional-Pneumatikventils (12),
- Vergleich des gemessenen Istwertes mit dem vorgegebenen Sollwert,
- Ansteuerung eines Pneumatikzylinders (9) bei Abweichung des Istwertes vom Sollwert,
- Übertragung des Verstellimpulses vom Pneumatikzylinder (9) auf ein Ritzel (8), das den Verstellimpuls über eine Zahnstange (7) an das Wellenlager (5) der Messerwelle (1) überträgt zur axialen Verschiebung der Messerwelle (1) mit dem daran befestigten Messerkopf (2) der Granuliermesser (3).

2. Verfahren nach Anspruch 1, **dadurch gekennzeichnet, dass** der Anpressdruck der Granuliermesser (3) an der Lochplatte vor Beginn des Granulierbetriebes in derselben Weise gemessen wird und der Granuliervorgang gestartet wird, wenn der Istwert dem Sollwert entspricht oder innerhalb des Toleranzbereiches liegt.

3. Verfahren nach Anspruch 1, **dadurch gekennzeichnet, dass** der Anpressdruck der Granuliermesser (3) an der Lochplatte vor Beginn des Granulierbetriebes in derselben Weise gemessen wird und der Beginn des Granuliervorgangs unterbunden wird, sobald der Istwert außerhalb des Toleranzbereichs liegt und zeitgleich eine Fehlermeldung abgegeben wird.

4. Verfahren nach Anspruch 1 oder 2, **dadurch gekennzeichnet, dass** die Granulierung sofort unterbrochen und eine visuelle und/oder akustische Störmeldung abgegeben wird, sobald der während des Granulierbetriebes laufend gemessene Istwert trotz Ansteuerung des Pneumatikzylinders (9) aus dem Toleranzbereich des Sollwertes heraus fällt.

5. Vorrichtung zur Durchführung des Verfahrens nach einem der Ansprüche 1 bis 4, mit einer Lochplatte zur Abgabe von thermoplastischen Kunststoffsträngen in die Granulierhaube einer Unterwassergranulierung, einer an die Granulierhaube anflanschbaren Stirnwand (10) der Granulierhaube, einem axial verschiebbar gelagerten Wellenlager (5), einer das Wellenlager (5) und die Stirnwand (10) durchdringenden, den Messerkopf (2) tragenden und von einem Wellenantriebsmotor (4) in Drehbewegung versetzten Messerwelle (1), **dadurch gekennzeichnet, dass** eine in ein Ritzel (8) eingreifende Zahnstange (7) zum axialen Vor- und Zurückbewegen des Wellenlagers (5) sowie ein Pneumatikzylinder (9) zum Übertragen eines Stellimpulses auf das Ritzel (8) vorgesehen sind und dass eine Steuereinheit den Pneumatikzylinder (9) über ein den Istwert des Anpressdruckes der Granuliermesser (3) an der Lochplatte messendes Proportional-Pneumatikventil (12) mit Istwertrückführung ansteuert.

6. Vorrichtung nach Anspruch 5, **dadurch gekennzeichnet, dass** der Wellenantriebsmotor (4) mit der im Störfall die Energiezufuhr zum Wellenantriebsmotor blockierenden Steuereinheit verbunden ist.

7. Vorrichtung nach Anspruch 5 oder 6, **dadurch gekennzeichnet, dass** das Ritzel (8) direkt oder über eine Übersetzung mit dem Pneumatikzylinder (9) verbunden ist.

## Claims

1. Method for the automatic control of the contact pressure, acting on a perforated plate, of the granulating blades (3) of an apparatus for granulating thermoplastic synthetic material strands under water, by axially displacing a blade shaft (1) driven by means of a shaft drive motor (4), and placing the granulating blades (3), which are connected to a blade head (2) of the blade shaft (1), against the perforated plate in a granulating hood, having the following method steps:
- storing a predetermined desired value for the contact pressure of the granulating blades (3) on the perforated plate and a predetermined tolerance range in a control unit,
- measuring the actual value of the contact pressure of the granulating blades (3) on the perforated plate by means of a proportional pneumatic valve (12),
- comparing the measured actual value with the predetermined desired value,
- controlling a pneumatic cylinder (9) if the actual value deviates from the desired value,
- transmitting the adjustment pulse from the pneumatic cylinder (9) to a pinion (8) which transmits the adjustment pulse to the shaft bearing (5) of the blade shaft (1) via a toothed rack (7) in order to axially displace the blade shaft (1) having the blade head (2) of the granulating blades (3) attached thereto.

2. Method as claimed in Claim 1, **characterised in that** the contact pressure of the granulating blades (3) on the perforated plate is measured prior to the start of the granulating operation in the same manner and the granulating process is started when the actual value corresponds to the desired value or is within the tolerance range.

3. Method as claimed in Claim 1, **characterised in that** the contact pressure of the granulating blades (3) on the perforated plate is measured prior to the start of the granulating operation in the same manner and the start of the granulating process is stopped as soon as the actual value is outside the tolerance range and an error message is emitted simultaneously.

4. Method as claimed in Claim 1 or 2, **characterised in that** the granulation is immediately interrupted and a visual and/or acoustic fault message is emitted as soon as the actual value measured continuously during the granulating operation is no longer within the tolerance range of the desired value despite the control of the pneumatic cylinder (9).

5. Apparatus for implementing the method as claimed in any one of Claims 1 to 4, having a perforated plate for outputting thermoplastic synthetic material strands into the granulating hood of an underwater granulator, an end wall (10) of the granulating hood, which end wall can be flange-mounted onto same, a shaft bearing (5) mounted in an axially displaceable manner, a blade shaft (1) which penetrates the shaft bearing (5) and the end wall (10), bears the blade head (2) and is set in rotary motion by a shaft drive motor (4), **characterised in that** a toothed rack (7) engaging into a pinion (8) is provided for the axial movement of the shaft bearing (5) back and forth and a pneumatic cylinder (9) is provided for transmitting a control pulse to the pinion (8), and **in that** a control unit controls the pneumatic cylinder (9) via a proportional pneumatic valve (12) which measures the actual value of the contact pressure of the granulating blades (3) on the perforated plate, with actual value feedback.

6. Apparatus as claimed in Claim 5, **characterised in that** the shaft drive motor (4) is connected to the control unit which blocks the supply of energy to the shaft drive motor in the event of a fault.

7. Apparatus as claimed in Claim 5 or 6, **characterised in that** the pinion (8) is connected to the pneumatic cylinder (9) either directly or via a transmission.

## Revendications

1. Procédé de commande automatique de la pression de pressage, agissant sur une plaque à trou, des lames à granuler (3) d'un dispositif de granulation de tronçons de matière synthétique thermoplastique sous l'eau, par déplacement axial d'un arbre porte-lames (1) entraîné au moyen d'un moteur d'entraînement d'arbre (4) et serrage des lames à granuler (3), reliées à une tête porte-lames (2) de l'arbre porte-lames (1), contre la plaque à trou dans un carter à granuler, avec les étapes de procédé suivantes :
- stockage en mémoire d'une valeur de consigne prédéterminée pour la pression de pressage des lames à granuler (3) sur la plaque à trou et d'une plage de tolérance prédéterminée dans une unité de commande,
- mesure de la valeur réelle de la pression de pressage des lames à granuler (3) sur la plaque à trou, au moyen d'une soupape pneumatique à caractéristique proportionnelle (12),
- comparaison de la valeur réelle mesurée à la valeur de consigne prédéterminée,
- commande d'un vérin pneumatique (9) en cas d'écart entre valeur réelle et valeur de consigne,
- transmission de l'impulsion de manoeuvre, par le vérin pneumatique (9), à un pignon (8) transmettant, par l'intermédiaire d'une crémaillère (7), l'impulsion de manoeuvre au palier d'arbre (5) de l'arbre porte-lames (1), en vue d'un déplacement axial de l'arbre porte-lames (1), avec la tête porte-lames (2) fixée sur lui, des lames à granuler (3).

2. Procédé selon la revendication 1, **caractérisé en ce que** la pression de pressage des lames à granuler (3) sur la plaque à trou est mesurée, de la même manière, avant le début du fonctionnement en granulation, et le processus de granulation est lancé lorsque la valeur réelle correspond à la valeur de consigne, ou est située dans les limites de la plage de tolérance.

3. Procédé selon la revendication 1, **caractérisé en ce que** la pression de pressage des lames à granuler (3) sur la plaque à trou est mesurée, de la même manière, avant le début du fonctionnement en granulation, et le début du processus de granulation est stoppé dès que la valeur réelle est située hors des limites de la plage de tolérance et que, simultanément, une information de défaut est indiquée.

4. Procédé selon la revendication 1 ou 2, **caractérisé en ce que** la granulation est cessée immédiatement et une information de perturbation visuelle et/ou acoustique est délivrée, dès que la valeur réelle, mesurée en continu pendant le fonctionnement en granulation, malgré la commande du vérin pneumatique (9), est située hors des limites de la plage de tolérance de la valeur de consigne.

5. Dispositif de mise en oeuvre du procédé selon l'une des revendications 1 à 4, avec une plaque à trou pour délivrer des tronçons de matière synthétique thermoplastique dans le carter de granulation d'une granulation sous l'eau, une paroi frontale (10), susceptible de former une bride pour le carter de granulation, du carter de granulation, un palier d'arbre (5) monté de manière déplaçable axialement, un arbre porte-lames (1), traversant le palier d'arbre (5) et la paroi frontale (10), portant la tête porte-lames (2) et entraîné en un mouvement de rotation par un moteur d'entraînement d'arbre (4), **caractérisé en ce qu'**une crémaillère (7) s'engrenant dans un pignon (8) pour produire le déplacement d'avancement et de recul du palier d'arbre (5), ainsi qu'un vérin pneumatique (9), pour la transmission d'une impulsion de réglage au pignon (8), sont prévus, et **en ce qu'**une unité de commande commande le vérin pneumatique (9) par l'intermédiaire d'une soupape pneumatique à caractéristique proportionnelle (12), équipée d'un retour de la valeur réelle, mesurant la valeur réelle de la pression de pressage des lames à granuler (3) sur la plaque à trou.

6. Dispositif selon la revendication 5, **caractérisé en ce que** le moteur d'entraînement d'arbre (4) est relié à l'unité de commande bloquant, en cas de perturbation, l'amenée d'énergie au moteur d'entraînement d'arbre.

7. Dispositif selon la revendication 5 ou 6, **caractérisé en ce que** le pignon (8) est relié au vérin pneumatique (9), directement ou par un engrenage.
